# EUROPEAN PATENT APPLICATION

(11) **EP 4 534 272 A1**
(43) Date of publication of application: **09.04.2025**
(21) Application number: 23816280.4
(22) Date of filing: 23.05.2023
(51) Int. Cl.: B29C 45/17, E06B 3/46, B29C 45/84, B29C 45/03

(54) **DOOR DEVICE FOR INJECTION MOLDING MACHINE**

(30) Priority: 31.05.2022 KR 20220066512; 20.12.2022 KR 20220178960
(71) Applicant: LS Mtron Ltd., Anyang-si, Gyeonggi-do 14119 (KR)
(72) Inventor: GOO, Jin Hoe, Anyang-si Gyeonggi-do 14119 (KR); LEE, You Seob, Anyang-si Gyeonggi-do 14119 (KR)
(74) Representative: K&L Gates LLP
(86) International application number: PCT/KR2023/006971
(87) International publication number: WO 2023/234618

(57) **Abstract**

The present invention is directed to a door device for an injection molding machine, including: a door frame configured to form an accommodation space for accommodating an injection molding machine; an upper door coupled to the door frame to be movable between an open position at which it opens the top side of the accommodation space and a closed position at which it closes the top side of the accommodation space; a first side door coupled to the door frame to be movable between an open position at which it opens one side of the accommodation space and a closed position at which it closes the top side of the accommodation space; and a first opening/closing linkage unit configured to allow the first side door and the upper door to operate in conjunction with each other so that the upper door is also opened as the first side door is opened.

## Description

### Technical Field

The present invention relates to an injection molding machine that performs injection molding to manufacture injection-molded products.

### Background Art

Injection molding is a manufacturing method that is most widely used for manufacturing plastic products. For example, various parts including covers and cases for products such as televisions, mobile phones, and PDAs can be manufactured through injection molding.

Generally, the manufacturing of products through injection molding is performed through the following processes. First, a molding material with a pigment, a stabilizer, a plasticizer, a filler, and the like added thereto is put into a hopper and made into a molten state. Next, the molten molding material is injected into a mold and solidified through cooling. Thereafter, the solidified molding material is extracted from the mold, and then unnecessary portions are removed. Through these processes, injection-molded products of various types and sizes are manufactured.

An injection molding machine is used as equipment for performing such injection molding. The injection molding machine includes an injection device and a molding device. The injection device feeds a molten molding material to the molding device. The molding device solidifies the molten molding material, fed from the injection device, through cooling. Such an injection molding machine includes a door device to ensure the safety of an operator, etc.

To this end, the door device for an injection molding machine according to a conventional art may include: a door frame configured to form an accommodation space for accommodating an injection molding machine; an upper door coupled to the door frame to be movable between an open position at which it opens the top side of the accommodation space and a closed position at which it closes the top side of the accommodation space; and a side door coupled to the door frame to be movable between an open position at which it opens one side of the accommodation space and a closed position at which it closes the top side of the accommodation space.

In this case, the door device for an injection molding machine according to the conventional art is implemented such that an injection-molded product is separated from the molding device in the upward direction by a crane, such as a robot arm, after the opening of the upper door. In this case, a space for the entry of the crane may be secured by opening the upper door. However, there is a problem in that the side door needs to be opened separately to prevent the crane from colliding with the side door during the process of entering from the upper direction. That is, the door device for an injection molding machine according to the conventional art is implemented such that the upper door and the side door are opened separately. Accordingly, the door device for an injection molding machine according to the conventional art needs to be equipped with a separate member, such as a rail, required to support the upper door, so that a problem can occur in that the crane collides with the rail during the process of entering the accommodation space. In addition, the door device for an injection molding machine according to the conventional art needs to open the upper door and the side door separately, so that there is a problem in that the efficiency of the opening operation for opening the upper door and the side door is reduced.

The crane may enter from the upper direction to the position where the upper door is open, may lift an injection-molded product, and may separate the injection-molded product from the molding device. In this case, the door device for an injection molding machine according to the conventional art has a problem in that the crane collides with the side door during the process of entering or exiting the accommodation space.

### Disclosure

### Technical Problem

The present invention has been contrived to overcome the above-described problems, and is intended to provide a door device for an injection molding machine that is capable of preventing a crane from colliding with a side door during the process of separating an injection-molded product from an injection molding machine.

### Technical Solution

In order to overcome the above technical problem, the present invention may include the following configurations:

The present invention provides a door device for an injection molding machine, the door device including: a door frame configured to form an accommodation space for accommodating an injection molding machine; an upper door coupled to the door frame to be movable between an open position at which it opens the top side of the accommodation space and a closed position at which it closes the top side of the accommodation space; a first side door coupled to the door frame to be movable between an open position at which it opens one side of the accommodation space and a closed position at which it closes the top side of the accommodation space; and a first opening/closing linkage unit configured to allow the first side door and the upper door to operate in conjunction with each other so that the upper door is also opened as the first side door is opened.

The present invention provides a door device for an injection molding machine, the door device including: a door frame (2) configured to form an accommodation space (21) for accommodating an injection molding machine (10); an upper door (3) coupled to the door frame (2) to be movable between an open position at which it opens the top side of the accommodation space (21) and a closed position at which it closes the top side of the accommodation space (21); and a first side door (4) coupled to the door frame (2) to be movable between an open position at which it opens one side of the accommodation space (21) and a closed position at which it closes the one side of the accommodation space (21). The first side door (4) includes a roller rail (41) protruding upward, and includes a roller unit (9) configured to movably couple the upper door (3) to the first side door (4). The roller unit (9) includes a vertical roller unit (91) configured to be disposed vertically and rotate along the top surface of the roller rail (41), and a horizontal roller unit (92) configured to be disposed horizontally and rotate along a side of the roller rail (41).

### Advantageous Effects

According to the present invention, the following effects may be achieved:

The present invention may be implemented such that the upper door is opened at the same time that the side door is opened. Accordingly, in the case where the upper door needs to be opened for the entry of a crane (a robot arm) or the like for separating an injection-molded product from an injection molding machine, the upper door may be opened by opening the side door.

The present invention may be implemented such that the side door supports the upper door. Accordingly, the present invention does not require a separate member, such as a rail, required to support the upper door, so that interference with the rail or the like can be prevented during a process of entry of a crane (a robot arm) or the like when the side door and the upper door are opened.

### Description of Drawings

FIG. 1 is a schematic perspective view of a door device for an injection molding machine according to the present invention;
FIG. 2 is a schematic perspective view of a case where an upper door, a first side door, and a second side door are disposed in closed positions in the door device for an injection molding machine according to the present invention;
FIG. 3 is a schematic perspective view of a case where the upper door and the first side door are disposed in open positions in the door device for an injection molding machine according to the present invention;
FIG. 4 is a schematic perspective view of a case where the upper door and the second side door are positioned in open positions in the door device for an injection molding machine according to the present invention;
FIG. 5 is a schematic perspective view of a case where the upper door is positioned in the open position in the door device for an injection molding machine according to the present invention;
FIG. 6 is a schematic perspective view of a case where the upper door, the first side door, and the second side door are disposed in the open positions in the door device for an injection molding machine according to the present invention;
FIG. 7 is a schematic perspective view of a first opening/closing linkage unit in the door device for an injection molding machine according to the present invention;
FIG. 8 is a schematic perspective view of the first opening/closing linkage unit when viewed from the inside of an accommodation space in a door device for an injection molding machine according to the present invention;
FIG. 9 is a schematic plan view of the first opening/closing linkage unit in the door device for an injection molding machine according to the present invention;
FIG. 10 is a schematic cross-sectional view of the first side door and the upper door in the door device for an injection molding machine according to the present invention;
FIG. 11 is a schematic plan view showing the first opening/closing linkage unit and a second opening/closing linkage unit in the door device for an injection molding machine according to the present invention;
FIG. 12 is a schematic cross-sectional view of the second side door and the upper door in the door device for an injection molding machine according to the present invention;
FIG. 13 is a schematic cross-sectional view showing an upper fixation unit in the door device for an injection molding machine according to the present invention; and
FIG. 14 is a schematic front view of a roller unit in the door device for an injection molding machine according to the present invention.

### Mode for Invention

Embodiments of a door device for an injection molding machine according to the present invention will be described in detail below with reference to the accompanying drawings.

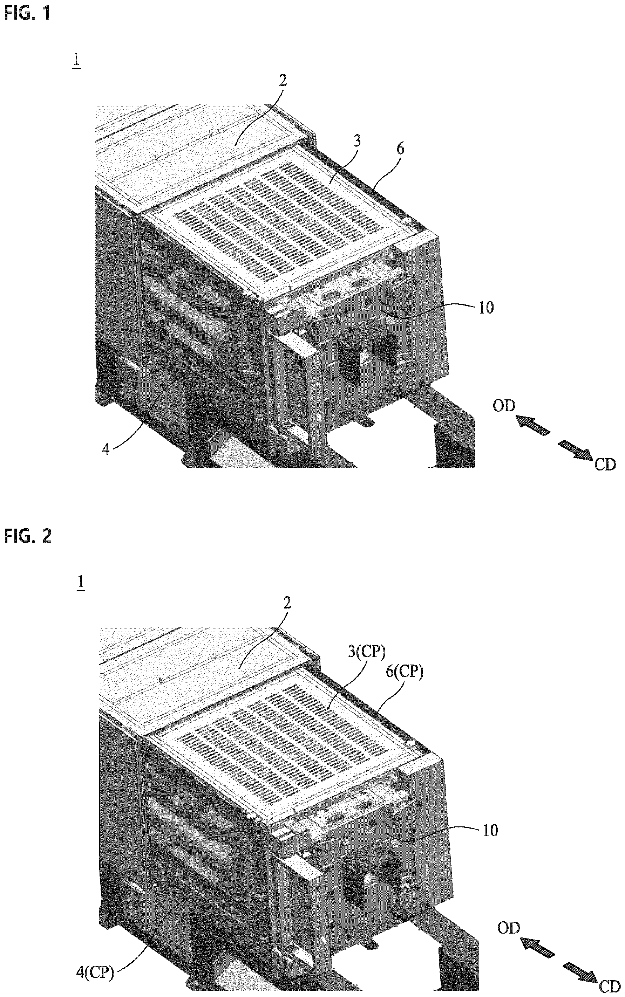

Referring to FIG. 1, a door device 1 for an injection molding machine according to the present invention is provided for an injection molding machine 10 for manufacturing injection-molded products. The injection molding machine 10 includes an injection device (not shown) configured to feed a molten molding material, and a molding device (not shown) configured to solidify the molten molding material, fed from the injection device, into an injection-molded product through cooling. The door device 1 for an injection molding machine according to the present invention is combined with at least one of the injection device and the molding device, thus being responsible for functions such as the function of ensuring the safety of an operator and the function of preventing foreign substances, generated from the injection molding machine 10, from flying away.

To this end, the door device 1 for an injection molding machine according to the present invention includes a door frame 2 configured to form an accommodation space 21 for accommodating the injection molding machine 10, an upper door 3 coupled to the door frame 2 to be movable between an open position OP at which it opens the top side of the accommodation space 21 and a closed position CP at which it closes the top side of the accommodation space 21, a first side door 4 coupled to the door frame 2 to be movable between an open position OP at which it opens one side of the accommodation space 21 and a closed position CP at which it closes the top side of the accommodation space 21, and a first opening/closing linkage unit 5 configured to allow the first side door and the upper door 3 to operate in conjunction with each other so that the upper door 3 is also opened as the first side door 4 is opened. Accordingly, the door device 1 for an injection molding machine according to the present invention may achieve the following operations and effects.

The door device 1 for an injection molding machine according to the present invention may be implemented such that the upper door 3 is opened at the same time that the first side door 4 is opened. Accordingly, the door device 1 for an injection molding machine according to the present invention may open the upper door 3 by opening the first side door 4 when the upper door 3 needs to be opened to allow a crane (a robot arm) or the like for separating an injection-molded product from the injection molding machine 10 to enter.

In addition, the door device 1 for an injection molding machine according to the present invention may be implemented such that the first side door 4 supports the upper door 3. Accordingly, the door device 1 for an injection molding machine according to the present invention does not require a separate member, such as a rail, required to support the upper door 3, so that interference with the rail or the like can be prevented during the process of entry of a crane (a robot arm) or the like when the first side door 4 and the upper door 3 are opened. As a result, the door device 1 for an injection molding machine according to the present invention may secure an additional entry space for the entry of a crane (a robot arm) or the like.

The door frame 2, the upper door 3, the first side door 4, and the first opening/closing linkage unit 5 will be specifically described below with reference to the accompanying drawings.

Referring to FIG. 1, the door frame 2 forms the accommodation space 21 that accommodates the injection molding machine 10. The door frame 2 may serve as the frame of the door device 1 for an injection molding machine according to the present invention. The door frame 2 may not only block an operator from approaching the injection molding machine 10, but also block byproducts, such as dust flying away from the injection molding machine 10, from being emitted to the outside. The door frame 2 may be combined with the first side door 4, a second side door 6, and the upper door 3. The door frame 2 may be formed to have a rectangular parallelepiped shape as a whole, but is not limited thereto. The door frame 2 may be formed in other shapes as long as it can accommodate the injection molding machine 10. For example, the door frame 2 may be formed to have an outer shape that is approximately the same as the outer shape of the injection molding machine 10.

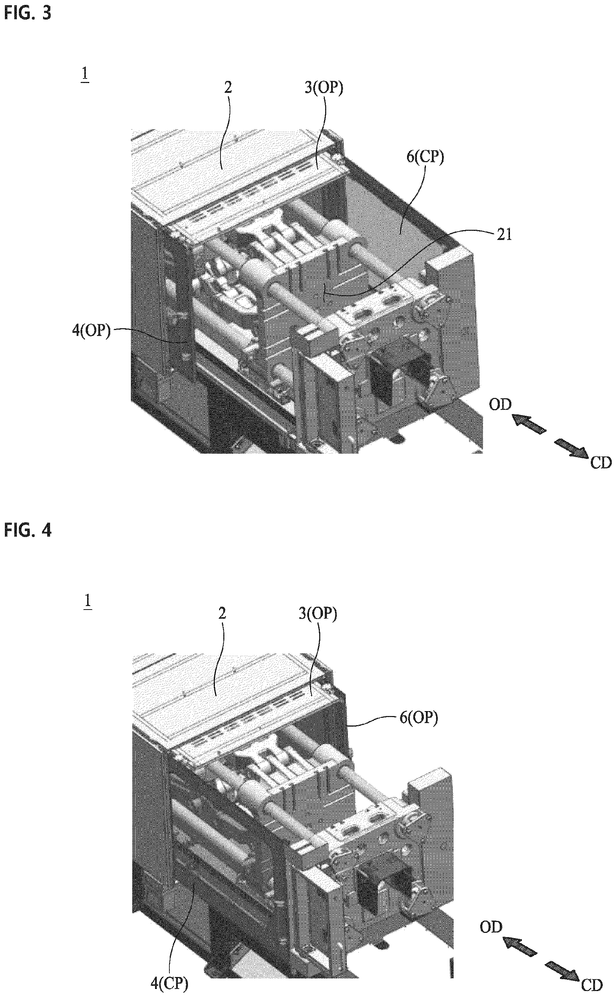

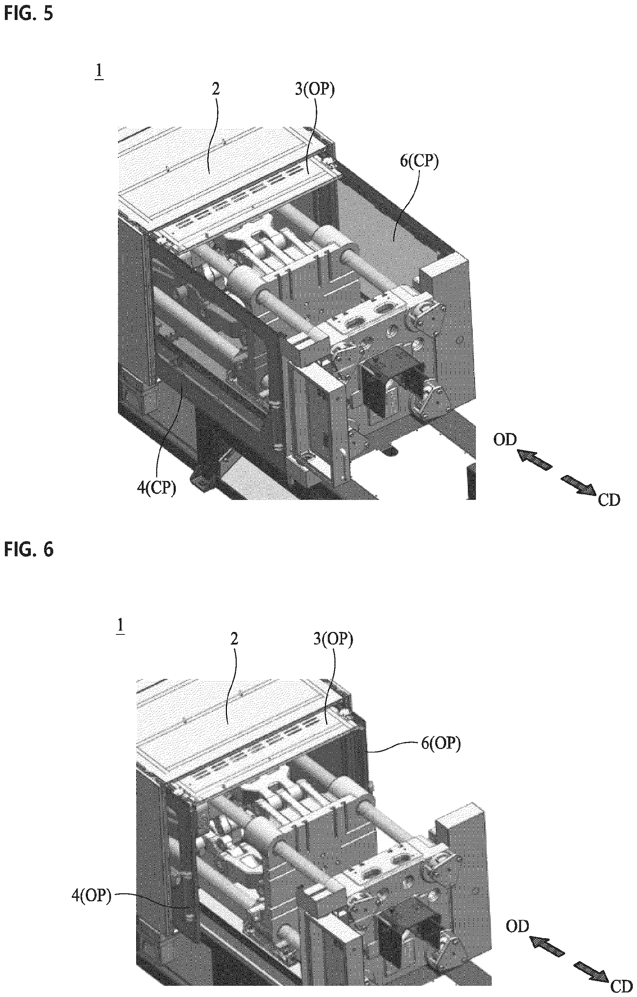

Referring to FIGS. 1 to 6, the upper door 3 is movably coupled to the door frame 2 to open or close the top side of the accommodation space 21. The upper door 3 may be slidably coupled to the door frame 2. In this case, the upper door 3 may move toward the door frame 2 and be inserted into the inner side of the door frame 2, thus being able to move to the open position OP at which it opens the top side of the accommodation space 21. Accordingly, the upper door 3 may open the top side of the accommodation space 21. In contrast, the upper door 3 may move toward the side opposite to the door frame 2 and protrude from the door frame 2, thus being able to move to the closed position CP at which it closes the top side of the accommodation space 21. Accordingly, the upper door 3 may close the top side of the accommodation space 21. The upper door 3 may be selectively opened together with the first side door 4 or the second side door 6 as the first side door 4 or the second side door 6 is opened. Accordingly, the door device 1 for an injection molding machine according to the present invention may open the upper door 3 by opening one of the first side door 4 and the second side door 6. Therefore, the door device 1 for an injection molding machine according to the present invention allows an operator, located on either the first side door 4 or the second side door 6, to also open the upper door 3 by opening the first side door 4 or the second side door 6 without moving his/her location. As a result, the door device 1 for an injection molding machine according to the present invention may increase the efficiency of the opening operation of opening the upper door 3 by shortening the time it takes for an operator to move to open the upper door 3. Meanwhile, the upper door 3 may move from the open position OP at which it opens the accommodation space 21 to the closed position CP at which it closes the accommodation space 21 separately from the first side door 4 or the second side door 6.

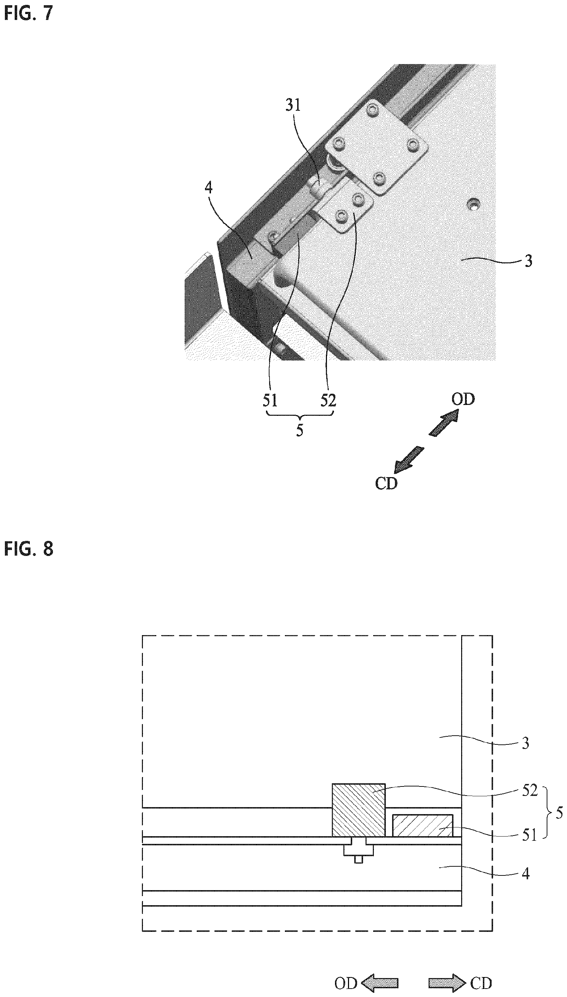

Referring to FIGS. 1 to 8, the first side door 4 is movably coupled to the door frame 2 to open or close a side of the accommodation space 21. The first side door 4 may be implemented to open or close one side of the accommodation space 21. In this case, the first side door 4 may be slidably coupled to the door frame 2. In this case, the first side door 4 may move toward the door frame 2 and be inserted into the inside of the door frame 2, thus being able to move to the open position OP at which it opens the one side of the accommodation space 21. Accordingly, the first side door 4 may open the one side of the accommodation space 21. In contrast, the first side door 4 may move to the side opposite to the door frame 2 and protrude from the door frame 2, thus being able to move to the closed position CP at which it closes the one side of the accommodation space 21. Accordingly, the first side door 4 may close the one side of the accommodation space 21. For example, the first side door 4 may be implemented to open or close the left side of the accommodation space 21. The first side door 4 may be coupled to the door frame 2 to be perpendicular to the upper door 3.

Referring to FIGS. 1 to 8, the first opening/closing linkage unit 5 allows the first side door 4 and the upper door 3 to operate in conjunction with each other so that the upper door 3 is also opened as the first side door 4 is opened. The first opening/closing linkage unit 5 may allow the first side door 4 and the upper door 3 to operate in conjunction with each other so that, when the first side door 4 is moved from the closed position CP to the open position OP, the upper door 3 is also moved to the open position OP. Furthermore, the first opening/closing linkage unit 5 may allow the first side door 4 and the upper door 3 to operate in conjunction with each other so that, when the first side door 4 is moved from the open position OP to the closed position CP, the upper door 3 is also moved to the closed position CP.

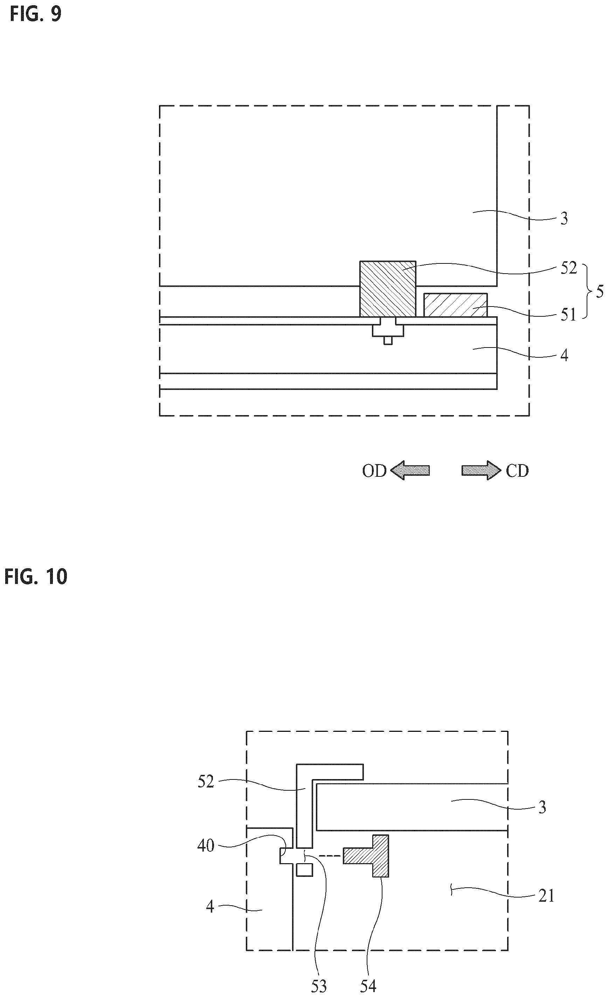

Referring to FIGS. 1 to 9, the first opening/closing linkage unit 5 may include a first opening member 51 and a first opening linkage member 52.

The first opening member 51 is coupled to the first side door 4. The first opening member 51 may be coupled to the inside of the first side door 4 to be positioned in the accommodation space 21. The first opening member 51 may be disposed to overlap the first opening linkage member 52 along the opening direction (the direction of arrow OD) in which the first side door 4 opens the side of the accommodation space 21.

The first opening linkage member 52 is coupled to the upper door 3. The first opening linkage member 52 may support the first opening member 51 that is moved in the opening direction (the direction of arrow OD) so that the upper door 3 is also moved as the first side door 4 is moved in the opening direction (the direction of arrow OD). Accordingly, the door device 1 for an injection molding machine according to the present invention may be implemented such that the upper door 3 is opened at the same time that the first side door 4 is opened. Therefore, the door device 1 for an injection molding machine according to the present invention may open the upper door 3 by opening the first side door 4 when the upper door 3 needs to be opened to allow a crane (a robot arm) or the like for separating an injection-molded product from the injection molding machine 10 to enter.

In addition, the door device 1 for an injection molding machine according to the present invention may be implemented such that the first side door 4 supports the upper door 3. Accordingly, the door device 1 for an injection molding machine according to the present invention does not require a separate member, such as a rail, required to support the upper door 3, so that interference with the rail or the like can be prevented during a process of entry of a crane (a robot arm) or the like when the first side door 4 and the upper door 3 are opened. Therefore, the door device 1 for an injection molding machine according to the present invention may secure an additional entry space for the entry of a crane (a robot arm) or the like.

Referring to FIGS. 1 to 9, the first opening linkage member 52 may be disposed forward toward the opening direction (the direction of arrow OD) with respect to the first opening member 51. The first opening linkage member 52 may be disposed further forward in the opening direction (the direction of arrow OD) than the first opening member 51. In this case, the upper door 3 may be moved together with the first side door 4 to the open position OP as the first side door 4 moves to the open position OP, but may be disposed at the open position OP as the first side door 4 moves to the closed position CP. For example, the door device 1 for an injection molding machine according to the present invention is implemented such that, when the first side door 4 is moved to the open position OP, the upper door 3 operates in conjunction with the first side door 4, so that the first side door 4 and the upper door 3 can be opened at the same time. In contrast, the door device 1 for an injection molding machine according to the present invention is implemented such that, when the first side door 4 is moved to the closed position CP, the upper door 3 is released from the linkage with the first side door 4, so that the upper door 3 may not be opened at the same time even when the first side door 4 is moved in the closing direction (the direction of arrow CD). In this manner, the door device 1 for an injection molding machine according to the present invention is implemented such that the operation of the upper door 3 is performed in conjunction with the operation in which the first side door 4 moves to the open position OP, but the operation of the upper door 3 may not be performed in conjunction with the operation in which the first side door 4 moves to the closed position CP.

Referring to FIGS. 1 to 10, the first opening/closing linkage unit 5 may include a first closing linkage hole 53 and a first closing linkage member 54.

The first closing linkage hole 53 is formed to pass through the first opening linkage member 52. The first closing linkage hole 53 may be disposed such that one side thereof faces the first side door 4. The first closing linkage hole 53 may be disposed such that the other side thereof faces the accommodation space 21. Accordingly, the first closing linkage member 54 may be coupled into the first closing linkage hole 53 through the accommodation space 21.

The first closing linkage member 54 is coupled into the first closing linkage hole 53. The first closing linkage member 54 may be coupled to pass through the first closing linkage hole 53. In this case, the first closing linkage member 54 may be inserted into the first closing linkage hole 53 so that the first side door 4 and the upper door 3 operate in conjunction with each other, and may then be coupled into a first closing recess 40 formed in the first side door 4. Accordingly, the door device 1 for an injection molding machine according to the present invention may be implemented such that the first side door 4 and the upper door 3 are coupled to each other through the first closing linkage member 54. Therefore, in the door device 1 for an injection molding machine according to the present invention, the upper door 3 may be moved at the same time that the first side door 4 moves from the closed position CP to the open position OP, and may also be moved at the same time that the first side door 4 moves from the open position OP to the closed position CP. In this manner, the door device 1 for an injection molding machine according to the present invention is implemented such that the first side door 4 and the upper door 3 completely operate in conjunction with each other through the first closing linkage member 54, so that not only the opening operation of opening the first side door 4 and the upper door 3, but also the closing operation of closing the first side door and the upper door 3 can each be performed at one time. The first closing linkage member 54 and the first closing linkage hole 53 may be coupled to each other in a screw manner. For example, when the first closing linkage member 54 is implemented as a bolt, the first closing linkage hole 53 may be implemented as a nut.

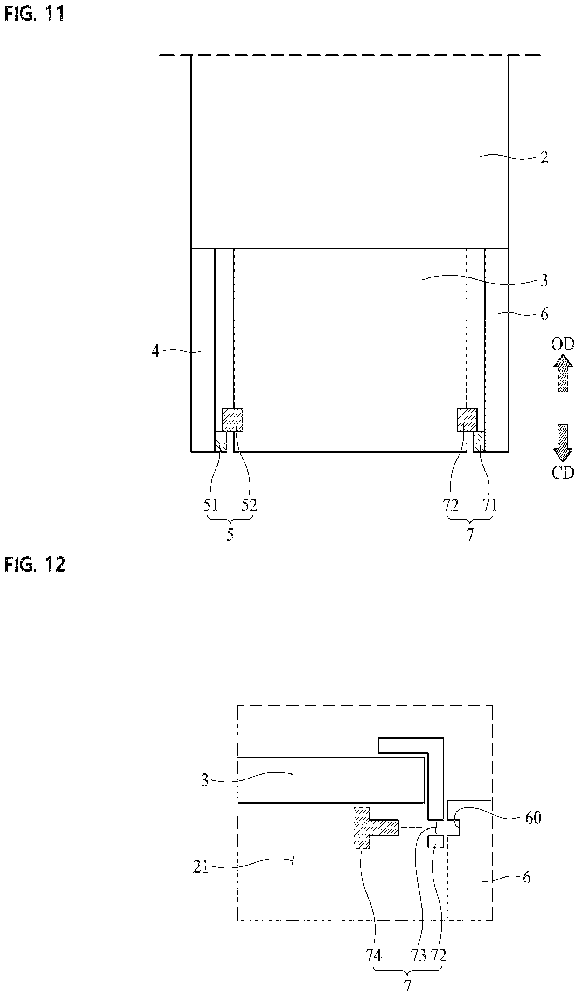

Referring to FIGS. 1 to 11, the door device 1 for an injection molding machine according to the present invention may include the second side door 6.

The second side door 6 is movably coupled to the door frame 2 to open or close one side of the accommodation space 21. The second side door 6 may be implemented to open or close the other side opposite to the one side. In this case, the second side door 6 may be slidably coupled to the door frame 2. In this case, the second side door 6 may move toward the door frame 2 and be inserted into the inside of the door frame 2, thus being able to move to an open position OP at which it opens the other side of the accommodation space 21. Accordingly, the second side door 6 may open the other side of the accommodation space 21. In contrast, the second side door 6 may move to the side opposite to the door frame 2 and protrude from the door frame 2, thus being able to move to a closed position CP at which it closes the other side of the accommodation space 21. Accordingly, the second side door 6 may close the other side of the accommodation space 21. For example, the second side door 6 may be implemented to open or close the left side of the accommodation space 21. The second side door 6 may be coupled to the door frame 2 to be perpendicular to the upper door 3.

Referring to FIGS. 1 to 11, the second opening/closing linkage unit 7 may include a second opening member 71 and a second opening linkage member 72.

The second opening member 71 is coupled to the second side door 6. The second opening member 71 may be coupled to the inside of the second side door 6 to be positioned in the accommodation space 21. The second opening member 71 may be disposed to overlap the second opening linkage member 72 along the opening direction (the direction of arrow OD) in which the second side door 6 opens the side of the accommodation space 21.

The second opening linkage member 72 is coupled to the upper door 3. The second opening linkage member 72 may support the second opening member 71 that moves in the opening direction (the direction of arrow OD) so that the upper door 3 is also moved as the second side door 6 is moved in the opening direction (the direction of arrow OD). Accordingly, the door device 1 for an injection molding machine according to the present invention may be implemented such that the upper door 3 is opened at the same time that the second side door 6 is opened. Therefore, the door device 1 for an injection molding machine according to the present invention may open the upper door 3 by opening the second side door 6 when the upper door 3 needs to be opened to allow a crane (a robot arm) or the like for separating an injection-molded product from the injection molding machine 10 to enter.

In addition, the door device 1 for an injection molding machine according to the present invention may be implemented such that the second side door 6 supports the upper door 3. Accordingly, the door device 1 for an injection molding machine according to the present invention does not require a separate member, such as a rail, required to support the upper door 3, so that interference with the rail or the like can be prevented during a process of entry of a crane (a robot arm) or the like when the second side door 6 and the upper door 3 are opened. Therefore, the door device 1 for an injection molding machine according to the present invention may secure an additional entry space for the entry of a crane (a robot arm) or the like.

Referring to FIGS. 1 to 11, the second opening linkage member 72 may be disposed forward toward the opening direction (the direction of arrow OD) with respect to the second opening member 71. The second opening linkage member 72 may be disposed further forward in the opening direction (the direction of arrow OD) than the second opening member 71. In this case, the upper door 3 is also moved to the open position OP as the second side door 6 is moved to the open position OP, but may be disposed in the open position OP when the second side door 6 is moved to the closed position CP. For example, the door device 1 for an injection molding machine according to the present invention may be implemented such that, when the second side door 6 is moved to the open position OP, the upper door 3 is operated in conjunction with the second side door 6, so that the second side door 6 and the upper door 3 can be opened at the same time. In contrast, the door device 1 for an injection molding machine according to the present invention may be implemented such that, when the second side door 6 is moved to the closed position CP, the upper door 3 is released from the linkage with the second side door 6, so that the upper door 3 may not also be opened even when the second side door 6 is moved in the closing direction (the direction of arrow CD). In this manner, the door device 1 for an injection molding machine according to the present invention is implemented such that the operation of the upper door 3 is performed in conjunction with the operation in which the second side door 6 is moved to the open position OP, but the operation of the upper door 3 may not be performed in conjunction with the operation in which the second side door 6 is moved to the closed position CP.

Referring to FIGS. 1 to 12, the second opening/closing linkage unit 7 may include a second closing linkage hole 73 and a second closing linkage member 74.

The second closing linkage hole 73 is formed to pass through the second open linkage member 72. The second closing linkage hole 73 may be disposed such that one side thereof faces the second side door 6. The second closing linkage hole 73 may be disposed such that the other side thereof faces the accommodation space 21. Accordingly, the second closing linkage member 74 may be coupled into the second closed linkage hole 73 through the accommodation space 21.

The second closing linkage member 74 is coupled into the second closing linkage hole 73. The second closing linkage member 74 may be coupled to pass through the second closing linkage hole 73. In this case, the second closing linkage member 74 may be inserted into the second closing linkage hole 73 so that the second side door 6 and the upper door 3 operate in conjunction with each other, and may then be coupled into a second closing recess 60 formed in the second side door 6. Accordingly, the door device 1 for an injection molding machine according to the present invention may be implemented such that the second side door 6 and the upper door 3 are coupled to each other through the second closing linkage member 74. Therefore, in the door device 1 for an injection molding machine according to the present invention, the upper door 3 may be moved at the same time that the second side door 6 is moved from the closed position CP to the open position OP, and may be moved at the same time that the second side door 6 is moved from the open position OP to the closed position CP. In this manner, the door device 1 for an injection molding machine according to the present invention is implemented such that the second side door 6 and the upper door 3 are completely operated in conjunction with each other through the second closing linkage member 74, so that not only the opening operation of opening the second side door 6 and the upper door 3 but also the closing operation of closing the second side door and the upper door 3 can each be performed at one time. The second closing linkage member 74 and the second closing linkage hole 73 may be coupled to each other in a screw manner. For example, when the second closing linkage member 74 is implemented as a bolt, the second closing linkage hole 73 may be implemented as a nut.

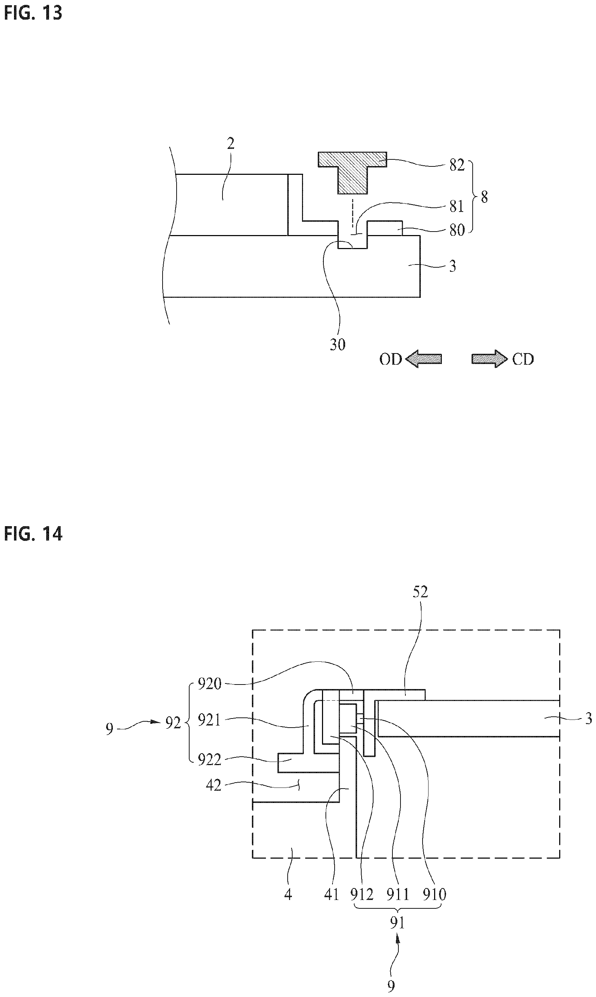

Referring to FIGS. 1 to 6 and 13, the door device 1 for an injection molding machine according to the present invention may include an upper fixation unit 8.

The upper fixation unit 8 couples the upper door 3 to the door frame 2. The upper fixation unit 8 may couple the upper door 3 to the door frame 2 so that the upper door 3 is fixed in the open position OP. Accordingly, the door device 1 for an injection molding machine according to the present invention may prevent the upper door 3 from moving from the open position OP to the closed position CP through the upper fixation unit 8. Therefore, the door device 1 for an injection molding machine according to the present invention may prevent the upper door 3 from moving in the closing direction (the direction of arrow CD) by itself due to impact or the like, thereby preventing an operator from colliding with the moving upper door 3 while performing maintenance work on the injection molding machine 10 with the upper door 3 open. As a result, the door device 1 for an injection molding machine according to the present invention may prevent a safety-related accident that may occur when an operator collides with the upper door 3.

Referring to FIGS. 1 to 6 and 13, the upper fixation unit 8 may include an upper fixation body 80, a fixation insertion hole 81, and an upper fixation member 82.

The upper fixation body 80 is coupled to the door frame 2. The upper fixation body 80 may protrude from the door frame 2 toward the closing direction (the direction of arrow CD). In this case, the upper fixation body 80 may be disposed to overlap a part of the upper door 3 disposed at the closed position CP.

The fixation insertion hole 81 is formed to pass through the upper fixation body 80. The fixation insertion hole 81 may be disposed such that one side thereof faces the upper door 3. The fixation insertion hole 81 may be disposed such that the other side thereof faces the outside of the door device 1 for the injection molding machine according to the present invention. In this case, the upper fixation member 82 may be coupled into the fixation insertion hole 81 through the outside.

The upper fixation member 82 is inserted into the fixation insertion hole 81. The upper fixation member 82 may be coupled to pass through the fixation insertion hole 81. In this case, the upper fixation member 82 may be inserted into the fixation insertion hole 81 so that the upper door 3 is fixed to the door frame 2, and may then be coupled into the upper fixation recess 30 formed in the upper door 3. Accordingly, the door device 1 for an injection molding machine according to the present invention may prevent the upper door 3 from moving from the open position OP to the closed position CP through the upper fixation member 82. Therefore, the door device 1 for an injection molding machine according to the present invention may prevent an operator from colliding with the moving upper door 3 while performing maintenance work on the injection molding machine 10 with the upper door 3 open by blocking the upper door 3 from moving in the closing direction (the direction of arrow CD) due to impact or the like. As a result, the door device 1 for an injection molding machine according to the present invention may prevent a safety-related accident that may occur due to the collision of an operator with the upper door 3. The upper fixation member 82 and the fixation insertion hole 81 may be coupled to each other in a screw manner. For example, when the upper fixation member 82 is implemented as a bolt, the fixation insertion hole 81 may be implemented as a nut.

Referring to FIGS. 1 to 6 and 14, the door device 1 for an injection molding machine according to the present invention may include a roller unit 9. In this case, the first side door 4 may include a roller rail 41 protruding upward.

The roller unit 9 movably couples the upper door 3 to the first side door 4. The roller unit 9 is slidably coupled to the upper side of the first side door 4, so that the upper door 3 can move between the open position OP and the closed position CP. The roller unit 9 may move the upper door 3 while rolling on the roller rail 41.

Referring to FIGS. 1 to 6 and 14, the roller unit 9 may include a vertical roller unit 91 and a horizontal roller unit 92.

The vertical roller unit 91 is disposed vertically and rotates along the top surface of the roller rail 41. The vertical roller unit 91 may be disposed to overlap the roller rail 41 along the vertical direction. Accordingly, the vertical roller unit 91 may be supported vertically by the roller rail 41.

The horizontal roller unit 92 is disposed horizontally and rotates along a side of the roller rail 41. The horizontal roller unit 92 may be disposed to overlap the roller rail 41 along the horizontal direction. Accordingly, the horizontal roller unit 92 may be supported horizontally by the roller rail 41.

Referring to FIGS. 1 to 6 and 14, the vertical roller unit 91 may include a vertical roller member 911 and a central shaft 910.

The vertical roller member 911 is rotated in contact with the top surface of the roller rail 41. The vertical roller member 911 may be coupled to the first opening linkage member 52 by the central shaft 910. That is, the central shaft 910 may connect the vertical roller member 911 and the first opening linkage member 52. The vertical roller member 911 may be coupled to be rotatable around the central shaft 910.

Referring to FIGS. 1 to 6 and 14, the horizontal roller unit 92 may include a horizontal roller body 920, an extension member 921, and a horizontal roller member 922.

The horizontal roller body 920 is coupled to the upper door 3. The horizontal roller body 920 may be coupled to the upper side of the upper door 3. The extension member 921 may be coupled to the horizontal roller body 920.

The horizontal roller member 922 is rotated in contact with the side of the roller rail 41. The horizontal roller member 922 may be rotated around the extension member 921. The horizontal roller member 922 is rotated along the roller rail 41 so that the upper door 3 can move to the open position OP or the closed position CP. In this manner, the horizontal roller member 922 may perform the function of moving the upper door 3 together with the vertical roller member 911. The horizontal roller member 922 may be inserted into a roller recess 42 formed in the first side door 4 and come into contact with the side of the roller rail 41.

The extension member 921 is connected to each of the horizontal roller body 920 and the horizontal roller member 922. The extension member 921 may connect the horizontal roller body 920 and the horizontal roller member 922. The extension member 921 may separate the horizontal roller member 922 from the horizontal roller body 920 so that the roller rail 41 is disposed between the horizontal roller member 922 and the horizontal roller body 920. Accordingly, in the door device 1 for an injection molding machine according to the present invention, the roller rail 41 may be disposed between the horizontal roller body 920 and the horizontal roller member 922. Therefore, the door device 1 for an injection molding machine according to the present invention may prevent the upper door 3 from protruding or being detached to the left or right side by supporting the side of the roller rail 41 with the horizontal roller member 922.

Meanwhile, although not shown, the door device 1 for an injection molding machine according to the present invention may include pluralities of vertical roller units 91 and horizontal roller units 92. In this case, the vertical roller units 91 and the horizontal roller units 92 may also be coupled to the second side door 6. That is, the vertical roller units 91 and the horizontal roller units 92 may be coupled to the left and right sides based on the upper door 3. The vertical roller units 91 and the horizontal roller units 92 coupled to the second side door may be implemented to be approximately identical to the vertical roller units 91 and the horizontal roller units 92 coupled to the first side door 4, so that a detailed description thereof will be omitted.

A process in which the upper door 3, the first side door 4, and the second side door 6 are operated in the case where the door device 1 for an injection molding machine according to the present invention includes the above configuration will be specifically described below.

Referring to FIGS. 2 to 6, the door device 1 for an injection molding machine according to the present invention may be operated as follows in the case where the first closing linkage member 54 and the second closing linkage member 74 are not coupled.

First, the upper door 3, the first side door 4, and the second side door 6 are all positioned at the closed positions CP, so that the accommodation space 21 can be completely closed. In this case, a process of manufacturing an injection-molded product in the injection molding machine 10 may be performed.

Next, an operator may move the first side door 4 from the closed position CP to the open position OP to open one side of the accommodation space 21. In this case, as the first side door 4 is moved to the open position OP, the upper door 3 may also be moved to the open position OP. Accordingly, the door device 1 for an injection molding machine according to the present invention is implemented such that, even when only the first side door 4 is opened to open one side of the accommodation space 21, the upper door 3 is opened at the same time, so that an operator can open the one side of the accommodation space 21 and the top side of the accommodation space 21 together. In contrast, an operator may move the first side door 4 from the open position OP to the closed position CP to close the one side of the accommodation space 21. In this case, the door device 1 for an injection molding machine according to the present invention may independently perform the operation of moving the first side door 4 from the closed position CP to the open position OP. Accordingly, even when the first side door 4 is moved to the closed position CP, the upper door 3 may not also be moved to the closed position CP.

In contrast, an operator may move the second side door 6 from the closed position CP to the open position OP to open the other side of the accommodation space 21. In this case, as the second side door 6 is moved to the open position OP, the upper door 3 may also be moved to the open position OP. Accordingly, the door device 1 for an injection molding machine according to the present invention is implemented such that the upper door 3 is opened at the same time even when only the second side door 6 is opened to open the other side of the accommodation space 21, so that an operator can open the other side of the accommodation space 21 and the upper side of the accommodation space 21 together. In contrast, an operator may move the second side door 6 from the open position OP to the closed position CP to close the other side of the accommodation space 21. In this case, the door device 1 for an injection molding machine according to the present invention may independently perform the operation of moving the second side door 6 from the closed position CP to the open position OP. Accordingly, even when the second side door 6 is moved to the closed position CP, the upper door 3 may not also be moved to the closed position CP.

In contrast, an operator may move the upper door 3 from the closed position CP to the open position OP to open the top side of the accommodation space 21. In this case, the door device 1 for an injection molding machine according to the present invention may independently perform the operation of moving the upper door 3 from the closed position CP to the open position OP. Accordingly, even when the upper door 3 is moved to the open position OP, the first side door 4 and the second side door 6 may not also be moved to the open position OP. Furthermore, an operator may move the upper door 3 from the open position OP to the closed position CP to close the top side of the accommodation space 21. In this case, the door device 1 for an injection molding machine according to the present invention may independently perform the operation of moving the upper door 3 from the open position OP to the closed position CP. Accordingly, even when the upper door 3 is moved to the closed position CP, the first side door 4 and the second side door 6 may not also be moved to the closed position CP.

Referring to FIGS. 2 to 6, the door device 1 for an injection molding machine according to the present invention may be operated as follows in the case where the upper fixation member 82 is coupled.

The upper door 3 may be disposed to be fixed to the open position OP by being coupled to the door frame 2 through the upper fixation member 82. In this manner, the upper door 3 is fixed to the open position OP, so that the operations of the first side door 4 and the second side door 6 can be performed independently of the operation of the upper door 3. For example, in the state in which the upper door 3 is fixed to the open position OP, the first side door 4 and the second side door 6 may be moved from the closed position CP to the open position OP. In addition, in the state where the upper door 3 is fixed to the open position OP, the first side door 4 and the second side door 6 may be moved from the open position OP to the closed position CP.

Referring to FIGS. 2 to 6, the door device 1 for an injection molding machine according to the present invention may be operated as follows in the case where the first closing linkage member 54 is coupled.

First, the upper door 3, the first side door 4, and the second side door 6 are all positioned at the closed positions CP, so that the accommodation space 21 can be completely closed. In this case, a process of manufacturing an injection-molded product in the injection molding machine 10 may be performed.

Next, an operator may move the first side door 4 from the closed position CP to the open position OP to open the one side of the accommodation space 21. In this case, as the first side door 4 is moved to the open position OP, the upper door 3 may also be moved to the open position OP. Accordingly, the door device 1 for an injection molding machine according to the present invention is implemented such that, even when only the first side door 4 is opened to open the one side of the accommodation space 21, the upper door 3 is opened at the same time, so that an operator can open the one side of the accommodation space 21 and the top side of the accommodation space 21 together. In addition, an operator may move the first side door 4 from the open position OP to the closed position CP to close the one side of the accommodation space 21. In this case, the door device 1 for an injection molding machine according to the present invention is implemented such that, even when only the first side door 4 is closed to close the one side of the accommodation space 21, the upper door 3 is closed at the same time through the first closing linkage member 54, so that an operator can close the one side of the accommodation space 21 and the top side of the accommodation space 21 together.

Next, an operator may move the second side door 6 from the closed position CP to the open position OP to open the other side of the accommodation space 21. In this case, the door device 1 for an injection molding machine according to the present invention allows the first side door 4 and the upper door 3 to operate in conjunction with each other through the first closing linkage member 54, so that the first side door 4 and the upper door 3 can be operated in an integrated manner. Accordingly, as the second side door 6 is moved to the open position OP, the first side door 4 and the upper door 3 may also be moved to the open position OP. That is, the door device 1 for an injection molding machine according to the present invention may completely open the accommodation space 21 by opening the upper door 3 and the first side door 4 even when only the second side door 6 is opened. In contrast, an operator may move the second side door 6 from the open position OP to the closed position CP to close the other side of the accommodation space 21. In this case, the door device 1 for an injection molding machine according to the present invention may independently perform the operation of moving the second side door 6 from the closed position CP to the open position OP. Accordingly, even when the second side door 6 is moved to the closed position CP, the upper door 3 and the first side door 4 may not also be moved to the closed position CP.

Referring to FIGS. 2 to 6, the door device 1 for an injection molding machine according to the present invention may be operated as follows in the case where the second closing linkage member 74 is coupled.

First, the upper door 3, the first side door 4, and the second side door 6 are all positioned at the closed position CP, so that the accommodation space 21 can be completely closed. In this case, a process of manufacturing an injection-molded product in the injection molding machine 10 may be performed.

Next, an operator may move the first side door 4 from the closed position CP to the open position OP to open the one side of the accommodation space 21. In this case, the door device 1 for an injection molding machine according to the present invention allows the second side door 6 and the upper door 3 to operate in conjunction with each other through the second closing linkage member 74, so that the second side door 6 and the upper door 3 can be operated in an integrated manner. Accordingly, as the first side door 4 is moved to the open position OP, the second side door 6 and the upper door 3 may also be moved to the open position OP. That is, the door device 1 for an injection molding machine according to the present invention may completely open the accommodation space 21 by opening the upper door 3 and the second side door 6 even when only the first side door 4 is opened. In contrast, an operator may move the first side door 4 from the open position OP to the closed position CP to close the one side of the accommodation space 21. In this case, the door device 1 for an injection molding machine according to the present invention may independently perform the operation of moving the first side door 4 from the closed position CP to the open position OP. Therefore, even when the first side door 4 is moved to the closed position CP, the upper door 3 and the second side door may not also be moved to the closed position CP.

Next, an operator may move the second side door 6 from the closed position CP to the open position OP to open the other side of the accommodation space 21. In this case, as the second side door 6 is moved to the open position OP, the upper door 3 may also be moved to the open position OP. Accordingly, the door device 1 for an injection molding machine according to the present invention is implemented such that the upper door 3 is opened at the same time even when only the second side door 6 is opened to open the other side of the accommodation space 21, so that an operator can open the other side of the accommodation space 21 and the upper side of the accommodation space 21 together. Furthermore, an operator may move the second side door 6 from the open position OP to the closed position CP to close the other side of the accommodation space 21. In this case, the door device 1 for an injection molding machine according to the present invention is implemented such that the upper door 3 is closed at the same time even when only the second side door 6 is closed to close the other side of the accommodation space 21 through the second closing linkage member 74, so that an operator can close the other side of the accommodation space 21 and the upper side of the accommodation space 21 together.

Referring to FIGS. 2 to 6, the door device 1 for an injection molding machine according to the present invention may be operated as follows in the case where the first closing linkage member 54 and the second closing linkage member 74 are coupled.

First, the upper door 3, the first side door 4, and the second side door 6 are all positioned at the closed position CP, so that the accommodation space 21 can be completely closed. In this case, a process of manufacturing an injection-molded product in the injection molding machine 10 may be performed.

Next, an operator may move the first side door 4 from the closed position CP to the open position OP to open the one side of the accommodation space 21. In this case, the door device 1 for an injection molding machine according to the present invention allows the first side door 4, the second side door 6, and the upper door 3 to operate in conjunction with each other through the first closing linkage member 54 and the second closing linkage member 74, so that the first side door 4, the second side door 6, and the upper door 3 can be operated in an integrated manner. Accordingly, as the first side door 4 is moved to the open position OP, the second side door 6 and the upper door 3 may also be moved to the open position OP. Furthermore, an operator may move the first side door 4 from the open position OP to the closed position CP to close the one side of the accommodation space 21. In this case, the door device 1 for an injection molding machine according to the present invention allows the first side door 4, the second side door 6, and the upper door 3 to operate in conjunction with each other through the first closing linkage member 54 and the second closing linkage member 74, so that the first side door 4, the second side door 6, and the upper door 3 can be operated in an integrated manner. Accordingly, as the first side door 4 is moved to the closed position CP, the second side door 6 and the upper door 3 may also be moved to the closed position CP.

Next, an operator may move the second side door 6 from the closed position CP to the open position OP to open the other side of the accommodation space 21. In this case, the door device 1 for an injection molding machine according to the present invention allows the first side door 4, the second side door 6, and the upper door 3 to operate in conjunction with each other through the first closing linkage member 54 and the second closing linkage member 74, so that the first side door 4, the second side door, and the upper door 3 can be operated in an integrated manner. Accordingly, as the second side door 6 is moved to the open position OP, the first side door 4 and the upper door 3 may also be moved to the open position OP. Furthermore, an operator may move the second side door 6 from the open position OP to the closed position CP to close the other side of the accommodation space 21. In this case, the door device 1 for an injection molding machine according to the present invention allows the second side door 6 and the upper door 3 to operate in conjunction with each other through the second closing linkage member 74 and the second closing linkage member 74, so that the first side door 4, the second side door 6 and the upper door 3 can be operated in an integrated manner. Therefore, as the second side door 6 is moved to the closed position CP, the first side door 4 and the upper door 3 may also be moved to the closed position CP.

The present invention described above is not limited to the above-described embodiments and the accompanying drawings, and it will be apparent to those having ordinary skill in the art to which the present invention pertains that various substitutions, modifications, and alternations may be made within the range that does not depart from the technical spirit of the present invention.

## Claims

1. A door device for an injection molding machine, the door device comprising:
a door frame (2) configured to form an accommodation space (21) for accommodating an injection molding machine (10);
an upper door (3) coupled to the door frame (2) to be movable between an open position at which it opens a top side of the accommodation space (21) and a closed position at which it closes the top side of the accommodation space (21) ;
a first side door (4) coupled to the door frame (2) to be movable between an open position at which it opens one side of the accommodation space (21) and a closed position at which it closes the top side of the accommodation space (21); and
a first opening/closing linkage unit (5) configured to allow the first side door (4) and the upper door (3) to operate in conjunction with each other so that the upper door (3) is also opened as the first side door (4) is opened.

2. The door device of claim 1, wherein:
the first opening/closing linkage unit (5) includes a first opening member (51) coupled to the first side door (4) and a first opening linkage member (52) coupled to the upper door (3); and
the first opening linkage member (52) supports the first opening member (51) that is moved in an opening direction so that the upper door (3) is also moved as the first side door (4) is moved in the opening direction.

3. The door device of claim 2, wherein:
the first opening linkage member (52) is disposed toward an opening direction in which the first side door (4) is opened with respect to the first opening member (51); and
the upper door (3) is also moved to the open position as the first side door (4) is moved to the open position, but is disposed at the open position when the first side door (4) is moved to the closed position.

4. The door device of claim 1, comprising an upper fixation unit (8) configured to couple the upper door (3) to the door frame (2); and
wherein the upper fixation unit (8) fixes the upper door (3) to the door frame (2) so that the upper door (3) is fixed at the open position at which it opens the accommodation space (21).

5. The door device of claim 4, wherein:
the upper fixation unit (8) includes an upper fixation body (80) coupled to the door frame (2), a fixation insertion hole (81) formed to pass through the upper fixation body (80), and an upper fixation member (82) inserted into the fixation insertion hole (81); and
the upper fixation member (82) is inserted into the fixation insertion hole (81) so that the upper door (3) is fixed to the door frame (2), and is also coupled into an upper fixation recess (30) formed in the upper door (3), thereby fixing the upper door (3) to the door frame (2).

6. The door device of claim 1, wherein:
the first opening/closing linkage unit (5) includes a first opening linkage member (52) coupled to the upper door (3), a first closing linkage hole (53) formed to pass through the first opening linkage member (52), and a first closing linkage member (54) inserted into the first closing linkage hole (53); and
the first closing linkage member (54) is inserted into the first closing linkage hole (53) and also coupled into a first closing recess (40) formed in the first side door (4), thereby allowing the first side door (4) and the upper door (3) to operate in conjunction with each other.

7. The door device of claim 1, comprising a second side door (6) disposed to face the first side door (4) and movably coupled to the door frame (2) to open or close an opposite side of the accommodation space (21);
wherein the second side door (6) includes a second opening/closing linkage unit (7) that allows the second side door (6) and the upper door (3) to operate in conjunction with each other so that the upper door (3) is also opened as the second side door (6) is opened.

8. The door device of claim 7, wherein the upper door (3) is opened selectively together with the first side door (4) or the second side door (6) as the first side door (4) or the second side door (6) is opened.

9. A door device for an injection molding machine, the door device comprising:
a door frame (2) configured to form an accommodation space (21) for accommodating an injection molding machine (10);
an upper door (3) coupled to the door frame (2) to be movable between an open position at which it opens a top side of the accommodation space (21) and a closed position at which it closes the top side of the accommodation space (21); and
a first side door (4) coupled to the door frame (2) to be movable between an open position at which it opens one side of the accommodation space (21) and a closed position at which it closes the one side of the accommodation space (21);
wherein the first side door (4) includes a roller rail (41) protruding upward, and includes a roller unit (9) configured to movably couple the upper door (3) to the first side door (4); and
wherein the roller unit (9) includes a vertical roller unit (91) configured to be disposed vertically and rotate along a top surface of the roller rail (41), and a horizontal roller unit (92) configured to be disposed horizontally and rotate along a side of the roller rail (41).

10. The door device of claim 9, comprising a first opening/closing linkage unit (5) configured to allow the first side door (4) and the upper door (3) to operate in conjunction with each other so that the upper door (3) is also opened as the first side door (4) is opened;
wherein the first opening/closing linkage unit (5) includes a first opening linkage member (52) coupled to the upper door (3); and
wherein the vertical roller unit (91) includes a vertical roller member (911) configured to rotate in contact with the top surface of the roller rail (41), and a central shaft (910) configured to connect the first opening linkage member (52) and the vertical roller member (911) to each other.

11. The door device of claim 9, wherein the horizontal roller unit (92) includes a horizontal roller body (920) coupled to the upper door (3), a horizontal roller member (922) configured to rotate in contact with the side of the roller rail (41), and an extension member (921) coupled to each of the horizontal roller body (920) and the horizontal roller member (922).

12. The door device of claim 9, further comprising a first opening/closing linkage unit (5) configured to allow the first side door (4) and the upper door (3) to operate in conjunction with each other so that the upper door (3) is also opened as the first side door (4) is opened.

13. The door device of claim 12, comprising a second side door (6) disposed to face the first side door (4) and movably coupled to the door frame (2) to open or close an opposite side of the accommodation space (21);
wherein the second side door (6) includes a second opening/closing linkage unit (7) that allows the second side door (6) and the upper door (3) to operate in conjunction with each other so that the upper door (3) is also opened as the second side door (6) is opened.

14. The door device of claim 12, comprising an upper fixation unit (8) configured to couple the upper door (3) to the door frame (2); and
wherein the upper fixation unit (8) fixes the upper door (3) to the door frame (2) so that the upper door (3) is fixed at the open position at which it opens the accommodation space (21).
